# EUROPÄISCHE PATENTSCHRIFT

(11) **EP 2 707 545 B1**
(45) Veröffentlichungstag und Bekanntmachung des Hinweises auf die Patenterteilung: **17.05.2017**
(21) Anmeldenummer: 12724852.4
(22) Anmeldetag: 10.05.2012
(51) Int. Cl.: D21H 23/50

(54) **VERFAHREN ZUR HERSTELLUNG VON PAPIERPRODUKTEN**
METHOD FOR PRODUCING PAPER PRODUCTS
PROCÉDÉ DE FABRICATION DE PRODUITS À BASE DE PAPIER

(30) Priorität: 10.05.2011 AT 6552011
(43) Veröffentlichungstag der Anmeldung: 19.03.2014
(73) Patentinhaber: IBS Austria GmbH, 8833 Teufenbach (AT)
(72) Erfinder: STEINDL, Roman, 3910 Zwettl (AT)
(74) Vertreter: Ellmeyer, Wolfgang
(86) Internationale Anmeldenummer: PCT/AT2012/050065
(87) Internationale Veröffentlichungsnummer: WO 2012/151602

(56) Entgegenhaltungen:
- EP-A2- 1 801 290
- WO-A1-2006/037750
- DE-A1- 2 108 658
- DE-A1-102004 038 759
- DE-A1-102006 018 760
- US-A- 3 536 580

## Beschreibung

Die Erfindung betrifft ein Verfahren zur Herstellung von Papier, Karton oder Pappe unter Aufbringung von Sprühstärke auf eine laufende, feuchte Materialbahn.

Bei der Herstellung von Papier, Karton oder Pappe, die nachstehend kollektiv als Papierprodukte bezeichnet werden, wird zur Erhöhung der Festigkeit in der Mehrzahl der Fälle Stärke zugesetzt. Insbesondere bei Verwendung mehr oder weniger großer Anteile an Altpapier zusätzlich zu frischem Zellstoff ist ein solcher Stärkezusatz vonnöten, da aufbereitetes Recyclingpapier üblicherweise eine deutlich kürzere mittlere Faserlänge aufweist, was die Festigkeit des Papierprodukts erheblich beeinträchtigen würde. Im Allgemeinen werden der Faserstoffsuspension zwischen 0,5 und 10 Gew.-%, gelegentlich bis zu 15 Gew.-%, üblicherweise zwischen etwa 1 und 5 Gew.-%, jeweils bezogen auf das Trockengewicht, an Stärke zugesetzt.

Die Stärke kann entweder als Massestärke, Sprühstärke oder Oberflächenstärke zugesetzt werden. Massestärke wird mit der Faserstoffsuspension bereits im Konstantteil der Papiermaschine, d.h. in der Bütte vor dem Stoffauflauf, vermischt, wobei häufig kationisch und/oder anionisch modifizierte Stärken zum Einsatz kommen, die als Pulver, Suspension oder vorwiegend als Lösung zugesetzt werden.

Sprühstärke wird in der Regel als wässrige Suspension, z.B. rund 3%ig, nach dem Stoffauflauf in der Siebpartie aufgebracht. Bei der Herstellung mehrlagiger Papierprodukte wird die Sprühstärke oftmals (auch) zwischen einzelne Lagen gesprüht, um bei der Verkleisterung die Lagenfestigkeit zu erhöhen. Die so aufgebrachte Sprühstärke dringt während des Passierens der Siebpartie in die Materialbahn ein und bewirkt wiederum eine Erhöhung der inneren Festigkeit des Papierprodukts.

Oberflächenstärke wird üblicherweise in der Leimpresse, d.h. in der Trockenpartie, in Form einer dünnen Films einer wässrigen Stärkelösung auf die Oberfläche der Materialbahn aufgebracht, d.h. aufgewalzt. Diese Suspension dient nicht nur der Erhöhung der Festigkeit, sondern speziell auch zur Einstellung der Oberflächeneigenschaften, insbesondere der Glätte, Porosität und Bedruckbarkeit, und kann auch eine Reihe von Additiven enthalten, wie z.B. Leimungsmittel, Pigmente, Farbstoffe und optische Aufheller.

Die Notwendigkeit des Zusatzes von Stärke schmälert freilich den wirtschaftlichen Nutzen der Verwendung von Recyclingpapier oder -fasern zum Teil erheblich. Aufgrund der Tatsache, dass Stärke ein natürliches Polymer mit einer vorgegebenen Korngrößenverteilung ist, durchdringt ein hoher Anteil der hydratisierten Sprühstärkekörner der Suspension in der Siebpartie die Materialbahn und wird zusammen mit dem Wasser abgezogen. Erfolgt vor der nachgeschalteten Abwasserkläranlage keine, zumindest grobe, mechanische Abtrennung, vorzugsweise unter Wiedergewinnung, der Stärke aus dem Abwasser, stellt dieser Sprühstärkeanteil im Abwasser eine zusätzliche Belastung für die Kläranlage dar.

Ziel der Erfindung war vor diesem Hintergrund die Bereitstellung eines verbesserten Verfahrens zur Herstellung eines Papierprodukts, bei dem die obigen Nachteile zumindest teilweise ausgemerzt werden können.

Der Erfinder des vorliegenden Anmeldungsgegenstands hat nun im Zuge seiner Forschungen Versuche unter Aufbringung fester Sprühstärke in Pulverform auf die feuchte Materialbahn durchgeführt, um den Wassergehalt niedrig zu halten und die Festigkeit des Papiers zu erhöhen. Ein solcher Auftrag von fester Stärke wird bereits in DE 2.108.658 A erwähnt. Die dortige Erfindung betrifft die Herstellung von Mehrlagenkarton durch Aufeinandergautschen von feuchten Einzellagen. Zur "Verklebung" dieser Einzellagen wird vorgeschlagen, ein Bindemittel, wie z.B. Stärke, nicht vollflächig auf zumindest eine der Einzellagen aufzutragen. Der nicht vollflächige Auftrag wird als wesentlich bezeichnet, da sich so Volumen, Gasdurchlässigkeit und Wasserdurchlässigkeit aufrechterhalten lassen. Insbesondere sollen so die beiden Siebseiten der Einzellagen gegeneinandergegautscht werden, wobei das zusätzlich aufgebrachte Bindemittel den bekannten Mangel an Feinststoffen im Bereich der siebseitigen Oberflächen beheben soll.

Die Verwendung eines Bindemittels in Pulverform wird zwar als vorteilhaft erwähnt, da dies einerseits den Wassergehalt der Bahn nicht erhöht und andererseits automatisch einen punktförmigen Auftrag des Bindemittels ergibt. Als bevorzugt wird aber der Sprühauftrag einer wässrigen Lösung oder Dispersion eines kationischen Bindemittels, wie z.B. Stärke, offenbart, da auf diese Weise eine feine und gleichmäßige Verteilung von diskreten Teilchen erzielbar ist. Konsequenterweise wird die Viskosität als wesentlicher Faktor für die Auswahl des Bindemittels genannt (die bei einem Trockenauftrag logischerweise keine Rolle spielt) und im einzigen Beispiel eine 3%-ige wässrige Stärkesuspension aufgesprüht. Die Art der Aufbringung von trockenem Bindemittel wird in der Beschreibung von DE 2.108.658 A jedoch nicht explizit offenbart. Die Aufbringung des Bindemittels erfolgt in jedem Fall unmittelbar vor dem Zusammengautschen, d.h. am Ende der Siebpartie.

Auch in WO 2006/037750 A1 und deren Prioritätsanmeldung DE 10 2004 048 430 A1 wird die Verwendung von fester Stärke angedeutet. Genaue Vorgangsweisen oder Vorteile der Verwendung fester Stärke gegenüber einer Suspension oder Dispersion werden jedoch in keiner der beiden Anmeldungen offenbart.

Die Forschungen des Erfinders haben nun jedoch ergeben, dass einfaches Aufstreuen oder ein Berieseln der Materialbahn mit Trockenstärke oder zwar möglich, aber nicht zielführend ist. Da der Transport der Faserstoffbahnen in modernen Papiermaschinen mit bis zu 2.000 m/min, d.h. 120 km/h, erfolgt, führt die Materialbahn an ihrer Oberfläche einen Luftschicht mit. Dieser "Luftpolster" muss von der Trockenstärke durchdrungen werden, um in die feuchte Bahn eindringen zu können. Wird einfach Stärkepulver auf die Bahn aufgestreut, gelangt ein großer Anteil gar nicht zur Bahnoberfläche, sondern prallt an der Luftschicht ab, verteilt sich zunächst in der Umgebungsluft und sinkt schließlich entweder neben der Papiermaschine zu Boden oder wird von einer Entlüftungsanlage abgesaugt. Eine nennenswerte Erhöhung der Festigkeit des Papiers ist auf diese Weise nicht möglich. Diese durch den Luftpolster verursachte Problematik wird in der dem Erfinder bekannten Literatur nicht thematisiert.

US 3.536.580 A aus 1970 offenbart ein Verfahren zum Beschichten einer Papierbahn mit Sprühstärke, wobei eingangs auch die Problematik des oberhalb der Bahn mitgeführten Luftpolsters erwähnt wird. Als Lösung des Problems wird offenbart, dass kleine Flüssigkeitstropfen oder Trockenstärke aufgebracht werden können, indem diese (bzw. die darin suspendierten Teilchen) elektrostatisch geladen werden und danach bloß in die Nähe der Papierbahn gebracht werden müssen, so dass deren entgegengesetzte Ladung sie durch das Luftpolster hindurch auf die Bahn zieht. Als Beispiele werden zwei ältere US-Patente, US 3.169.882 und US 3.169.883, zitiert, in denen Vorrichtungen zum Aufsprühen von Suspensionen offenbart werden.

Die Aufbringung der Sprühstärke, als Suspension oder Trockenstärke, erfolgt durch Aufsprühen auf einen schräg zur Vertikalen stehenden, rotierenden Verteiler (siehe Fig. 2), wodurch die Tropfen bzw. Körner über einen größeren Bereich der Bahnoberfläche verteilt werden. Mit welcher Geschwindigkeit die Stärke aus der Düse austritt, ist dabei freilich für die Durchdringung des Luftpolsters unerheblich, da die Teilchen bzw. Tröpfchen ohnehin vom Verteiler abprallen. Höhere Sprühgeschwindigkeiten bewirken lediglich eine breitere Verteilung derselben. Die Ablagerung auf der Bahn erfolgt aufgrund elektrostatischer Anziehungskräfte.

EP 1.801.290 A2 beschreibt ein Verfahren zum Aufsprühen von schweren Partikeln mit einem spezifischen Gewicht von zumindest 2 g/cm³, wie z.B. Korund (4 g/cm³), auf eine relativ langsam (max. 100 m/min) bewegte Substratbahn mit einer Kunstharzoberfläche. Es wird festgestellt, dass das hohe spezifische Gewicht der Partikel ausreicht, damit sie genügend tief in die Kunstharzschicht eindringen können. Ein Luftpolster oberhalb der Bahn stellt keinerlei nennenswerten Widerstand für diese Teilchen dar und wird folglich gar nicht erwähnt.

Stärke hat hingegen nur ein spezifisches Gewicht von etwa 1,5 g/cm³ und kann demzufolge an einem solchen mitgeführten Luftpolster abprallen.

Eine zumindest teilweise Lösung dieser Problematik besteht im Vorsehen eines Pulverstreuers für Trockenstärke unmittelbar oberhalb der Materialbahn, beispielsweise in einem Abstand von (deutlich) weniger als 1 cm. Dadurch bricht sich die Luftschicht am Pulverstreuer, so dass ein höherer Anteil an Trockenstärke auf die Bahnoberfläche gelangen kann. Aufgrund der Luftverwirbelungen in diesem Bereich geht jedoch immer noch ein relativ großer Anteil der Stärke verloren. Darüber hinaus bringen Unebenheiten in der Materialbahn das Risiko des Schabens der Faserstoffbahn am Pulverstreuer mit sich, was im schlimmsten Fall zu einem Riss der Bahn führt.

Ziel der Erfindung war daher die Bereitstellung eines Verfahrens, mit dem die Festigkeitsparameter von Papierprodukten durch Zusatz trockener Stärke deutlich verbessert werden können, ohne dass große Anteile der Stärke verloren gehen.

### OFFENBARUNG DER ERFINDUNG

Dieses Ziel wird durch Bereitstellung eines Verfahrens zur Herstellung von Papier, Karton oder Pappe erreicht, bei dem trockene Sprühstärke auf eine laufende, feuchte Materialbahn aufgebracht wird und das dadurch gekennzeichnet ist, dass die Stärke in Pulverform mittels einer oder mehrerer Düsen zusammen mit einem Trägergas mit einer Geschwindigkeit von zumindest 0,5 m/s und nicht mehr als 3 m/s auf die feuchte Materialbahn aufgesprüht wird.

Durch das erfindungsgemäße Aufsprühen der Trockenstärke durch eine oder mehrere Düsen, was nachstehend auch der Einfachkeit halber kurz als "Aufdüsen" bezeichnet wird, mit einer Geschwindigkeit von zumindest 0,5 m/s kann im Wesentlichen die gesamte, in einem Trägerluftstrom transportierte Stärke den Luftpolster oberhalb der Materialbahn durchdringen und gelangt so auf die Bahnoberfläche bzw. wird so in dieser fixiert.

Bevorzugt ist dabei eine möglichst gleichmäßige Verteilung der Stärke über die Materialbahn, um die Festigkeitsparameter des Papierprodukts über seine gesamte Fläche zu erhöhen. Auch wenn nachstehend mitunter nur von einer Düse die Rede ist, versteht es sich daher, dass damit auch die Mehrzahl, z.B. eine oder mehrere Serien von Düsen, umfasst sein soll. Weiters wird die Stärke vorzugsweise auf die Oberseite der Bahn aufgedüst, womit hierin die von der Siebseite abgewandte Seite, auch als Filzseite bezeichnet, gemeint ist. In bestimmten Fällen jedoch kann der Auftrag auch erst nach dem Ablösen der feuchten Bahn vom Sieb von der Unterseite erfolgen.

Das Trägergas ist zwar nicht speziell eingeschränkt, solange es keine unerwünschten Reaktionen in der Papierbahn hervorruft, aus Kostengründen wird aber in der Regel Luft das Gas der Wahl sein.

Ein weiterer Vorteil des erfindungsgemäßen Verfahrens liegt darin, dass die aufgedüste feste Stärke eine gewisse Zeit benötigt, um vom Wasser in der Materialbahn benetzt, hydratisiert und suspendiert oder gelöst zu werden. Bei geeigneter Wahl der Parameter des erfindungsgemäßen Verfahrens, wie z.B. Düsendruck, Art und Korngröße der Stärke, Wassergehalt und Transportgeschwindigkeit der Materialbahn, Ansaugdruck in der Siebpartie usw., steht der Stärke während des Passierens der Siebpartie nicht ausreichend Zeit zur Verfügung um die Materialbahn vollständig durchdringen zu können. Auf diese Weise wird in der Siebpartie im Wesentlichen keine Sprühstärke zusammen mit dem Wasser abgezogen.

An welcher Stelle der Siebpartie einer Papiermaschine die trockene Sprühstärke auf die Materialbahn aufgedüst wird, ist nicht speziell eingeschränkt. Je nachdem, welche Parameter des Papierprodukts verbessert werden sollen, kann die Aufbringung beispielsweise schon kurz nach dem Stoffauflauf oder auch erst kurz vor oder nach der Wasserlinie erfolgen, wodurch der Stärke unterschiedlich lange Zeit zur Verfügung steht, in die Materialbahn einzudringen und sich darin zu verteilen. Mit Wasserlinie ist jener Punkt gemeint, ab dem die Bahn in der Siebpartie so weit entwässert wurde, dass ihre Oberfläche nicht mehr spiegelt.

Beispielsweise hat es sich zur Verbesserung des Berstdrucks als vorteilhaft erwiesen, die Sprühstärke kurz nach dem Stoffauflauf aufzudüsen, zur Verbesserung des so genannten Wax Pik, einer mittels Wachsstifttest ermittelten Kennzahl für die Oberflächenfestigkeit, wird sie jedoch vorzugsweise erst kurz vor der Wasserlinie aufgedüst, wie die späteren Beispiele dies klar belegen.

Bei ansonsten üblichen Parametern hat sich es sich als erfindungswesentlich her ausgestellt, die Stärke mit Luft als Trägergas mit einer Geschwindigkeit von zumindest 0,5 m/s, vorzugsweise zumindest 1 m/s, auf die Materialbahn aufzusprühen, womit hierin jeweils die Austrittsgeschwindigkeit aus der Düse gemeint ist. Eine niedrigere Austrittsgeschwindigkeit als 0,5 m/s hat sich als zu gering erwiesen, um es im Wesentlichen der gesamten aufgedüsten Stärke zu ermöglichen, den Luftpolster zu durchdringen - speziell bei sehr rasch laufenden Papiermaschinen, die einen dicken Luftpolster mit sich führen.

Bei sehr hohen Austrittsgeschwindigkeiten, wie z.B. mehr als 2 oder insbesondere mehr als 3 m/s, könnte aber einerseits ein unwirtschaftlich hoher Düsendruck erforderlich sein, und andererseits könnte die Stärke zu tief in die Bahn hinein- oder durch diese hindurchgedrückt ("durchgeschossen") werden, so dass sie in der Siebpartie die Materialbahn möglicherweise doch zur Gänze durchdringt.

Bevorzugte Bereiche für die Austrittsgeschwindigkeit sind daher nach derzeitigen Erkenntnissen des Erfinders 0,75 bis 2,5 m/s, noch bevorzugter 1 bis 2 m/s, insbesondere 1 bis 1,5 m/s.

Die Entfernung der Düse(n) von der Oberfläche der Materialbahn ist nicht speziell eingeschränkt und hängt vor allem von der jeweiligen Düsenaustrittsgeschwindigkeit und der Transportgeschwindigkeit der Materialbahn ab. Für die obigen bevorzugten Geschwindigkeiten der Stärketeilchen zwischen 0,5 und 3 m/s am Düsenausgang haben sich Kombinationen mit Düsenabständen zwischen 5 und 80 cm, vorzugsweise zwischen 10 und 50 cm, als vorteilhaft erwiesen. Bei einem zu großen Abstand müsste die Düsenaustrittsgeschwindigkeit erhöht werden, um den Luftpolster zu durchdringen, was unwirtschaftlich wäre, und bei einer zu geringen Entfernung könnte die Oberflächenintegrität der Materialbahn in der Siebpartie durch den Luftstrahl beeinträchtigt werden.

Zu beachten ist hierbei auch das Sprühbild, das mit der oder den Düse(n) erzielt wird, d.h. das Verteilungsmuster der von der oder den Düse(n) abgegebenen Stärkekörnern auf der Oberfläche der Materialbahn. Um eine ausreichende Wirkung über die gesamte Faserstoffbahn zu erzielen, sollten sich die Sprühbilder mehrerer Düsen überlappen, um so einen gleichmäßigen Auftrag der Stärke zu ermöglichen. Bei zu geringem Abstand der Düsen von der Bahn kann dafür eine zu hohe Anzahl an Düsen erforderlich sein, was den apparativen Aufwand erhöhen würde.

Bei einem sehr knappen Abstand könnten darüber hinaus ähnliche Probleme auftreten, wie sie zuvor im Zusammenhang mit einem Pulverstreuer erwähnt wurden. Für vorgegebene Betriebsparameter einer bestimmten Papiermaschine ist die jeweilige optimale Kombination aus Düsenanzahl, Düsenaustrittsgeschwindigkeit und Düsenabstand vom einschlägigen Fachmann, z.B. anhand von Sprühbildern, ohne übermäßiges Experimentieren leicht zu ermitteln.

In besonders bevorzugten Ausführungsformen wird die Stärke vor dem Auftreffen auf der Materialbahn elektrostatisch geladen. Dadurch wird die Trockenstärke von der normalerweise geerdeten Faserstoffbahn angezogen, wodurch der gemäß vorliegender Erfindung ohnehin geringe, an die Umgebung verloren gehende Anteil des Stärkepulvers noch weiter reduziert werden kann.

Die Art und Weise, wie die Stärke elektrostatisch geladen wird, ist nicht speziell eingeschränkt. So kann sie beispielsweise vor der Zufuhr zur Düse, vor dem Eintritt in die Düse oder nach dem Austritt aus der Düse elektrostatisch geladen werden, etwa durch Passieren eines mittels lonisierungselektroden erzeugten elektrischen Felds oder durch elektrostatische Aufladung aufgrund von Reibung in der Zuleitung zur Düse. In manchen Ausführungsformen kann die Stärke auch innerhalb der Düse elektrostatisch geladen, indem lonisierungselektroden in der Düse, z.B. am Düsenende, vorgesehen werden.

In weiteren bevorzugten Ausführungsformen der Erfindung erfolgt das Aufsprühen entgegen der Transportrichtung der Materialbahn, d.h. so, dass die mittlere Sprührichtung mit der Transportrichtung der Bahn einen spitzen Winkel bildet, vorzugsweise einen Winkel zwischen 30° und 60°. Das bedeutet, dass die Sprühstärke schräg von oben auf die sich der Düsenstation annähende Materialbahn aufgesprüht wird. Dadurch wird die Relativgeschwindigkeit zwischen dem Luftpolster und den darauf auftreffenden Stärketeilchen erhöht, was deren Durchdringung des Luftpolsters erleichtert und den Anteil an nicht auf die Bahn aufgebrachter Sprühstärke noch weiter reduziert. Auf diese Weise kann die trockene Sprühstärke anderseits auch mit einem geringeren Druck des Trägergases aufgedüst werden.

Zur Erzielung eines bestimmten Verteilungsmusters der auf der Materialbahn kann es bei Verwendung mehrerer Düsen in bestimmten Fällen auch vorteilhaft sein, die Düsen auf unterschiedliche Sprühwinkel einzustellen. Das schließt auch Fälle mit ein, bei denen bestimmte Düsen nicht gegen, sondern in die Laufrichtung der Materialbahn gerichtet werden.

Die Art der aufgedüsten Stärke ist zwar nicht speziell eingeschränkt, in bevorzugten Ausführungsformen der Erfindung wird als Sprühstärke ein Pulver aus kaltlöslicher Stärke aufgesprüht, d.h. eine Stärke mit einer solchen Korngrößenverteilung und Oberflächenbeschaffenheit, dass sie während des Passierens der Siebpartie in der nassen Materialbahn (kolloidal) gelöst wird. Dies gewährleistet die effiziente Wirkung der Stärke als Bindemittel für die sonstigen Komponenten der Faserstoffbahn - auch bereits in der Siebpartie, da Stärke diese Wirkung unmittelbar mit der Ausbildung einer Lösung entfaltet.

Ob eine kaltlösliche Stärke zum Einsatz kommt, hängt maßgeblich von der Art der Pressenpartie ab. Bei Verwendung bestimmter Pressfilze kann kaltlösliche Stärke mitunter auch nicht bevorzugt sein, da die bereits in der Siebpartie einsetzende Verkleisterung dazu führen kann, dass die Stärke zumindest teilweise am Pressfilz oder an der Presswalze haften bleibt.

Die Korngröße der Stärke ist ebenfalls nicht speziell eingeschränkt und hängt maßgeblich vom Ursprung der Stärke ab, z.B. ob es sich um Mais-, Weizen- oder Kartoffelstärke handelt, wie sie in Europa zumeist zum Einsatz kommt, oder um Tapioka- oder Reisstärke, die in Asien am leichtesten verfügbar sind. Vorzugsweise weist die Stärke gemäß vorliegender Erfindung eine mittlere Korngröße von zumindest 5 µm auf, um ein gezieltes Aufdüsen ohne nennenswerte Verluste zu ermöglichen und gleichzeitig optimale Bindewirkung zu erzielen. Eine zu geringe mittlere Korngröße ergibt mitunter zu leichte Partikel, um den Luftpolster zu durchdringen. Eine zu hohe mittlere Korngröße, z.B. von über 300 oder gar über 500 µm, könnte hingegen bei vorgegebener Dosierungsmenge zu wenige Stärkepartikel bereitstellen, um eine gewünschte Verteilung auf der Bahnoberfläche zu erzielen, so dass die Menge der aufgedüsten Stärke erhöht werden müsste, was unwirtschaftlich sein kann.

Die Menge an nach dem erfindungsgemäßen Verfahren aufgedüster Stärke ist prinzipiell nicht eingeschränkt und hängt unter anderem davon ab, ob die Sprühstärke zusätzlich zu oder anstelle von Massestärke und/oder Oberflächenstärke aufgebracht wird. Vorzugsweise wird die Sprühstärke gemäß vorliegender Erfindung in einem Anteil von 0,1 bis 20 Gew.-%, vorzugsweise 0,2 bis 10 Gew.-%, bezogen auf die Trockensubstanz der Materialbahn, aufgesprüht. Insbesondere ersetzt die nach dem erfindungsgemäßen Verfahren aufgedüste Stärke sowohl Masse- als auch Oberflächenstärke im Wesentlichen zur Gänze, was das Papierherstellungsverfahren als Ganzes vereinfacht und wirtschaftlicher macht.

Die pulverförmige Sprühstärke kann im erfindungsgemäßen Verfahren entweder alleine oder in Kombination mit anderen festen Komponenten, insbesondere mit pulverförmigen Additiven, wie z.B. Leimungsmitteln, Pigmenten, Farbstoffen oder dergleichen, aufgedüst werden, wodurch eigene Zumisch- oder Aufbringschritte für diese Komponenten entfallen können.

Nachstehend wird die Erfindung anhand von konkreten Ausführungsbeispielen beschrieben, die lediglich als Illustration, nicht aber als Einschränkung zu verstehen sind.

### BEISPIELE

### Beispiel 1 & Vergleichsbeispiel 1

Auf einer moderat laufenden Langsiebpapiermaschine wurde aus einem reinen Zellstoffgemisch aus Softwood, Eukalyptussulfat und Nadelsulfit unter Zusatz einer kationischen Massestärke, Füllstoff, Leimungsmittel und Nassfestmittel ein einlagiges Papier mit einem Zielflächengewicht von 170 g/m² hergestellt. Im Vergleichsbeispiel wurde keine zusätzliche Sprühstärke eingesetzt, im erfindungsgemäßen Beispiel 1 wurde mittels erfindungsgemäßer Sprühdüsenvorrichtung mit einem Sprühdüsenabstand von 15 cm mit 1,5 m/s Düsenaustrittsgeschwindigkeit eine handelsübliche, pulverförmige, granuläre, säuremodifizierte Maisstärke in einer Menge von 3-4 g/m² zusätzlich aufgetragen. Der Stärkeauftrag erfolgte in diesem Beispiel kurz nach dem Stoffauflauf.

Aus den hergestellten Papierbahnen wurden Prüfmuster von verschiedenen Bereichen der Bahn entnommen und auf ihre Papiereigenschaften untersucht. Die dabei erhaltenen Mittelwerte der typischen Papieruntersuchungsmethoden für Vergleichsbeispiel 1 (V1) und Beispiel 1 der Erfindung (B1) sind in der nachfolgenden Tabelle 1 vergleichend aufgelistet.

**Tabelle 1**

| | | **V1** | **B1** |
|---|---|---|---|
| Flächengewicht | [g/m²] | 168 | 171 |
| Dicke | [mm] | 0,25 | 0,25 |
| Reißlänge trocken | längs [m] | 5.216 | 6.070 |
| | quer [m] | 2.459 | 2.750 |
| Bruchlast trocken | längs [N/15 mm] | 132,9 | 154,2 |
| | quer [N/15 mm] | 61,4 | 70,1 |
| Wax Pik | Dennison | 12 | 13 |
| Berstdruck | absolut [N/cm²] | 42,6 | 55,5 |

Der Vergleich zeigt deutlich die Verbesserung der Festigkeitswerte aufgrund der Wirkung der vorliegenden Erfindung. Neben der deutlichen Erhöhung der Reißlängen und Bruchlasten ist die massive Zunahme des Berstdrucks um mehr als 30 % des Ausgangswerts besonders auffallend. Dies ist unter anderem das Resultat der Aufbringung kurz nach dem Stoffauflauf, wodurch die Stärke ausreichend Zeit hatte, sich in der Materialbahn zu verteilen.

### Beispiele 2 bis 10 & Vergleichsbeispiel 2

Das erfindungsgemäße Verfahren wurde mit derselben Versuchsanordnung wie zuvor in Beispiel 1 wiederholt, wobei in diesem Fall das Aufdüsen jedoch erst kurz vor der Wasserlinie erfolgte und folgende Typen von Stärke verwendet wurden.
- A:: säuremodifizierte Maisstärke
- B:: oxidierte Maisstärke
- C:: oxidierte kationische Maisstärke
- D:: native Weizenstärke
- E:: oxidierte Kartoffelstärke
- F:: oxidierte acetylierte Kartoffelstärke
- G:: säuremodifizierte Kartoffelstärke

Die Ergebnisse für Vergleichsbeispiel 2 (V2) und die Beispiele 2 bis 10 der Erfindung (B2 bis B10) sind in umseitiger Tabelle 2 angegeben.

**Tabelle 2**

| | | **V2** | **B2** | **B3** | **B4** | **B5** | **B6** | **B7** | **B8** | **B9** | **B10** |
|---|---|---|---|---|---|---|---|---|---|---|---|
| Sprühstärke | | | A | B | C | C | D | E | F | G | G |
| Flächengewicht | [g/m²] | 168 | 168 | 169 | 169 | 168 | 168 | 169 | 169 | 172 | 169 |
| Reißlänge trocken | längs [m] | 5.051 | 5.248 | 5.269 | 5.259 | 5.357 | 5.512 | 5.247 | 5.570 | 5.179 | 5.107 |
| | quer [m] | 2.375 | 2.573 | 2.549 | 2.449 | 2.508 | 2.459 | 2.504 | 2.499 | 2.561 | 2.408 |
| Bruchlast trocken | längs [N/15 mm] | 127,7 | 131,9 | 134,0 | 133,7 | 135,4 | 138,9 | 133,4 | 141,2 | 134,0 | 129,5 |
| | quer[N/15mm] | 59,7 | 64,7 | 64,8 | 62,3 | 63,4 | 62,0 | 63,7 | 63,4 | 66,3 | 61,1 |
| Wax Pik | Dennison | 11 | 16 | 13 | 16 | 18 | 14 | 16 | 16 | 16 | 16 |
| Berstdruck | absolut [N/cm²] | 45,7 | 50,3 | 46,2 | 48,0 | 47,0 | 51,7 | 46,9 | 45,4 | 48,2 | 44,4 |

Wie aus Tabelle 2 hervorgeht wurden durch das erfindungsgemäße Aufdüsen trockener Sprühstärke bei (nahezu) gleich bleibendem Flächengewicht wiederum sämtliche untersuchte Eigenschaften des Papiers verbessert. In dieser Beispielsgruppe wurden jedoch nicht der Berstdruck besonders stark verbessert (der in Beispiel 10 gegenüber dem Vergleich sogar ganz geringfügig abnahm), sondern vielmehr der Wax Pik, also die Oberflächenfestigkeit, die sich in den meisten Beispielen um 45 %, in einem Fall aber sogar um über 60 % verbesserte.

Dies rührt daher, dass die Aufbringung nicht am Beginn der Siebpartie, sondern erst kurz vor der Wasserlinie erfolgte. Ohne sich auf eine bestimmte Theorie festlegen zu wollen, wird angenommen, dass dadurch in der Bahn schon eine höhere Feststoffkonzentration herrschte, was offenbar die Auflösung und Verteilung der Stärke verlangsamte, und die trockene Sprühstärke vor allem weniger Zeit zur Verfügung hatte, um sich in der Bahn zu verteilen.

Bemerkenswert ist auch, dass, obwohl alle eingesetzten Stärketypen vorteilhafte Ergebnisse lieferten, es doch erkennbare Unterschiede zwischen den verschiedenen Stärken gab. So hatten etwa die Stärken D und F, d.h. native Weizenstärke und säuremodifizierte Kartoffelstärke, die stärksten Auswirkungen auf Reißlänge und Bruchlast, während Stärke C, d.h. oxidierte kationische Maisstärke, besonders starken Einfluss auf den Wax Pik hatten. Ein durchschnittlicher Fachmann wird in der Lage sein, ohne übermäßiges Experimentieren, sondern durch einfache Versuchsreihen, die am besten geeignete Stärke für den gewünschten Zweck zu ermitteln.

Zu erwähnen ist auch, dass Werte von 16 bis 18 Dennison für den Wax Pik bisher üblicherweise nur durch eine vergleichsweise aufwändige Oberflächenbeschichtung des Papiers erzielbar waren, während durch das Verfahren der Erfindung nun bereits im Verlauf der Papierherstellung für entsprechende Oberflächenfestigkeiten gesorgt werden kann.

Somit stellt die vorliegende Erfindung ganz offenkundig ein Verfahren bereit, durch das Papierprodukte mit erheblich verbesserten Eigenschaften erhältlich sind.

## Patentansprüche

1. Verfahren zur Herstellung von Papier, Karton oder Pappe, bei dem trockene Sprühstärke auf eine laufende, feuchte Materialbahn aufgebracht wird,
**dadurch gekennzeichnet, dass** die Stärke in Pulverform mittels einer oder mehrerer Düsen zusammen mit einem Trägergas mit einer Geschwindigkeit von zumindest 0,5 m/s und nicht mehr als 3 m/s auf die feuchte Materialbahn aufgesprüht wird.

2. Verfahren nach Anspruch 1, **dadurch gekennzeichnet, dass** die Stärke mit einer Geschwindigkeit von zumindest 1 m/s auf die Materialbahn aufgesprüht wird.

3. Verfahren nach Anspruch 1 oder 2, **dadurch gekennzeichnet, dass** die Stärke gleichmäßig über die gesamte Materialbahn aufgesprüht wird.

4. Verfahren nach einem der Ansprüche 1 bis 3, **dadurch gekennzeichnet, dass** die Stärke elektrostatisch geladen wird.

5. Verfahren nach Anspruch 4, **dadurch gekennzeichnet, dass** die Stärke vor der Zufuhr zu der/den Düse(n) elektrostatisch geladen wird.

6. Verfahren nach Anspruch 4 oder 5, **dadurch gekennzeichnet, dass** die Stärke innerhalb der Düse(n) elektrostatisch geladen wird.

7. Verfahren nach einem der vorangegangenen Ansprüche, **dadurch gekennzeichnet, dass** die Stärke in einem spitzen Winkel von oben auf die sich der/den Düse(n) annähernde Materialbahn aufgesprüht wird.

8. Verfahren nach Anspruch 7, **dadurch gekennzeichnet, dass** der Winkel zwischen der mittleren Sprührichtung und der Transportrichtung der Materialbahn im Bereich von 30° bis 60° liegt.

9. Verfahren nach einem der vorangegangenen Ansprüche, **dadurch gekennzeichnet, dass** kaltlösliche Stärke aufgesprüht wird.

10. Verfahren nach einem der vorangegangenen Ansprüche, **dadurch gekennzeichnet, dass** die Stärke eine mittlere Korngröße von zumindest 5 µm aufweist.

11. Verfahren nach einem der vorangegangenen Ansprüche, **dadurch gekennzeichnet, dass** die Stärke in einem Anteil von 0,1 bis 20 Gew.-%, vorzugsweise 0,2 bis 10 Gew.-%, bezogen auf die Trockensubstanz der Materialbahn, aufgesprüht wird.

## Claims

1. A process for the manufacture of paper, paperboard or cardboard, wherein dry spray starch is applied to a moving, wet material web,
**characterized in that** the starch is sprayed onto the wet material web in powder form by means of one or more nozzle(s) together with a carrier gas at a velocity of at least 0.5 m/s and not more than 3 m/s.

2. The process according to claim 1, **characterised in that** the starch is sprayed onto the material web at a velocity of at least 1 m/s.

3. The process according to claim 1 or claim 2, **characterised in that** the starch is sprayed uniformly over the entire material web.

4. The process according to any one of the claims 1 to 3, **characterised in that** the starch is electrostatically charged.

5. The process according to claim 4, **characterised in that** the starch is electrostatically charged before being supplied to the nozzle(s).

6. The process according to claim 4 or claim 4, **characterised in that** the starch is electrostatically charged within the nozzle(s).

7. The process according to any one of the preceding claims, **characterised in that** the starch is sprayed at an acute angle from above onto the material web approaching the nozzle(s).

8. The process according to claim 7, **characterised in that** the angle between the average spraying direction and the conveying direction of the material web ranges from 30° to 60°.

9. The process according to any one of the preceding claims, **characterised in that** cold soluble starch is sprayed on.

10. The process according to any one of the preceding claims, **characterised in that** the starch has an average grain size of at least 5 µm.

11. The process according to any one of the preceding claims, **characterised in that** said starch is sprayed on at a proportion of 0.1 to 20 % by weight, preferably of 0.2 to 10 % by weight, based on the dry matter of the material web.

## Revendications

1. Procédé pour la production de papier ou de carton, dans lequel un jet d'un amidon sec est appliqué sur une feuille continue mouillée courante,
**caractérisé en ce que** l'amidon est appliqué par pulvérisation sous forme pulvérisé sur la feuille continue mouillée à l'aide d'un ou plusieurs pulvérisateurs en combinaison avec un gaz porteur à une vitesse d'au moins 0,5 m/s et ne dépassant pas 3 m/s.

2. Procédé selon la revendication 1, **caractérisé en ce que** l'amidon est appliqué par pulvérisation sur la feuille continue mouillée à une vitesse d'au moins 1 m/s.

3. Procédé selon la revendication 1 ou 2, **caractérisé en ce que** l'amidon est appliqué par pulvérisation de manière homogène sur l'entier de la feuille continue.

4. Procédé selon l'une des revendications 1 à 3, **caractérisé en ce que** l'amidon est chargé électrostatiquement.

5. Procédé selon la revendication 4, **caractérisé en ce que** l'amidon est chargé électrostatiquement avant d'être introduit dans le/s pulvérisateur/s.

6. Procédé selon la revendication 4 ou 5, **caractérisé en ce que** l'amidon est chargé électrostatiquement à l'intérieur du/des pulvérisateur/s.

7. Procédé selon l'une des revendications précédentes, **caractérisé en ce que** l'amidon est appliqué par pulvérisation sous un angle aigu d'en haut sur la feuille continue qui se rapproche du/des pulvérisateur/s.

8. Procédé selon la revendication 7, **caractérisé en ce que** l'angle entre la direction moyenne de pulvérisation et la direction de transport de la feuille continue varie entre 30° et 60°.

9. Procédé selon l'une des revendications précédentes, **caractérisé en ce qu'**il est de l'amidon soluble à froid qui est appliqué par pulvérisation.

10. Procédé selon une des revendications précédentes, **caractérisé en ce que** l'amidon a une grosseur de grain moyen d'au moins 5 µm.

11. Procédé selon une des revendications précédentes, **caractérisé en ce que** l'amidon est appliqué par pulvérisation à une proportion de 0,1 à 20 % en poids, de préférence de 0,2 à 20 % en poids, par rapport à la matière sèche de la feuille continue.
